# EUROPEAN PATENT SPECIFICATION

(11) **EP 2 270 096 B1**
(45) Date of publication and mention of the grant of the patent: **26.06.2019**
(21) Application number: 10183877.9
(22) Date of filing: 03.10.2005
(51) Int. Cl.: C08L 77/00, C08L 77/06, B32B 27/34, F16L 11/04

(54) **Structure comprising flexible semicrystalline polyamides**
Flexible semikristalline Polyamide Stukturen
Structures comprenant des polyamides flexibles semicristallins

(30) Priority: 05.10.2004 FR 0410481
(43) Date of publication of application: 05.01.2011
(62) Divisional of application: 05794788.9
(73) Proprietor: Arkema France, 92700 Colombes (FR)
(72) Inventor: Blondel, Philippe, 27300, BERNAY (FR); Montanari, Thibaut, 27300, MENNEVAL (FR); Linemann, Annett, 66121 Saarbrücken (DE); Amouroux, Nicolas, 51100, REIMS (FR); Decraemer, Henri, 27170, BEAUMONTEL (FR)
(74) Representative: Schaefer, Anne-Sophie

(56) References cited:
- US-A1- 2002 019 477
- US-A1- 2002 082 352
- US-A1- 2002 142 118

## Description

### Field of the invention

The present invention relates to flexible semicrystalline polyamides. They are useful for manufacturing parts, by extrusion or injection moulding, that are resistant to the fluids used in motor vehicles and to solvents, said fluid being compressed air for the brake circuits of heavy goods vehicles.

### Prior art and the technical problem

The polyamide nylon-12 (PA-12), because of its remarkable mechanical properties and its resistance to petrol, oil and greases is widely used in motor vehicles and heavy goods vehicles. Because of the developments in engines and a change in their environment, there is now a requirement for thermoplastics that can be used at temperatures of 20 to 30°C above the operating temperatures of PA-12, while still maintaining good flexibility, impact strength, chemical resistance and good convertibility in extrusion. Polyamides having a higher melting point than PA-12 are known, such as for example PA-6, PA-6,6, PA-4,6, PA-6,10, PA-6,12 and PA-10,10. However, the problem not solved at the present time is that these pure PAs are not flexible enough.

Patent EP 1 038 921 describes polyamide-based thermoplastic compositions comprising, by weight:
50 to 99% of a polyamide;
1 to 50% of a catalyzed polyamide;
0 to 40% of a plasticizer;
0 to 60%, preferably 0 to 30%, of a flexible modifier;
the total being 100%.

These compositions are useful for manufacturing, for example, flexible hoses. The examples relate only to PA-11 and PA-12, but other homopolyamides and copolyamides are mentioned in the description.

Patent Application US 2002-0019477 describes, in the examples, moulding materials comprising PA-6,12 with acid end groups, PA-6,12 with amine end groups, a grafted EPR (grafted by maleic anhydride), an ethylene/alkyl acrylate/glycidyl methacrylate copolymer and a plasticizer (BBSA). Other homopolyamides and copolyamides are mentioned in the description.

Patent Application US 2002-0082352 describes polyamide-based compositions to be used in multilayer structures. The examples describe compositions comprising high-viscosity PA-12, a polyamine/polyamide copolymer and either a grafted SEBS or a blend of an ethylene/propylene block copolymer and of a grafted polypropylene. Other homopolyamides and copolyamides are mentioned in the description.

Patent Application US 2002-0119272 describes polyamide-based compositions to be used in multilayer structures. One of the layers comprises:
a polyamide chosen from PA-6, PA-6,6 and PA-6/6,6;
a polyamine-polyamide;
optionally, a polyamide chosen from PA-11, PA-12, PA-6,12, PA-10,12 and PA-12,12.

A composition has now been found that is based on a polyamide resulting from the chain linking of a diamine having from 6 to 10 carbon atoms, of a diacid having from 10 to 12 carbon atoms and, optionally, of at least one monomer chosen from lactams, α,ω-aminocarboxylic acids, diamines and diacids, this composition being able to be used at temperatures of 20 to 30°C above the operating temperatures of PA-12, while still maintaining good flexibility, impact strength, chemical resistance and good convertibility in extrusion.

### Brief description of the invention

The present invention relates to a hose for transferring of fluids, said fluid being compressed air for the brake circuits of heavy goods vehicles, and in which the inner layer is in contact with said fluid, said hose comprising in succession from the outside inwards:
- a layer consisting of a composition, noted C, comprising, by weight, the total being 100%:
   - 70 to 95%, advantageously 75 to 90% of at least one polyamide A1, of formula X.Y/ Z or 6.Y2/Z in which:
      X denotes the residues of an aliphatic diamine having from 6 to 10 carbon atoms,
      Y denotes the residues of an aliphatic dicarboxylic acid having from 10 to 14 carbon atoms ,
      Y2 denotes the residues of an aliphatic dicarboxylic acid having from 15 to 20 carbon atoms and
      Z denotes at least one unit chosen from the residues of a lactam, the residues of an α,ω-aminocarboxylic acid, the unit X1.Y1 in which X1 denotes the residues of an aliphatic diamine and Y1 denotes the residues of an aliphatic dicarboxylic acid, the weight ratios Z/(X+Y+Z) and Z/(6+Y2+Z) being between 0 and 15%;
         said polyamide A1 being chosen between PA-6.10, PA-6.14, PA-6.18 and PA-10.10,
   - 5 to 20%, advantageously 10 to 15% of a plasticizer;
   - 0 to 5% of an impact modifier; and
   - 0 to 5% of a polyamide A2
   - a coextrusion tie; and
   - a layer of another polyamide.

Advantageously, the inherent viscosity of the polyamide A1 is between 0.5 and 2 and preferably between 0.8 and 1.8.

The advantage of these compositions is the low water uptake, which does not exceed 3.5% and advantageously 3% by weight. Another advantage compared with PA-6 is the good zinc chloride resistance.

The proportion of Z is sufficient to lower the crystallinity of the PA-X,Y and of the PA-6,Y2 and to facilitate the addition of plasticizer or of impact modifier, but not too high so as not to obtain a copolyamide having a melting point below that of PA-12.

The composition of the invention may also contain a thermoplastic polyolefin such as, for example, HDPE, LDPE or LLDPE.

The hose may include other layers consisting of other materials.

One advantage of the hose comprising a layer consisting of compositions of the invention compared with PA-12 is the 20 to 30°C higher operating temperature and the improved heat ageing.

Another advantage is that, in a multilayer structure, the composition of the invention in which X is hexamethylenediamine and Y is sebacic acid adheres to PA-6 (or blends having a PA-6 matrix) and to EVOH. The EVOH layer may contain an impact modifier (for example EPR or EPDM, optionally grafted). Thus, in a structure consisting of the following successive layers (starting with the outer layer):
(1) PA-6,y/ PA-6 or a blend having a PA-6 matrix;
(2) PA-6,y/ EVOH/ PA-6 or a blend having a PA-6 matrix;
(3) PA-6,y/ EVOH/ PA-6,y;
(4) PA-6,y/ PA-6 or a blend having a PA-6 matrix / EVOH/ PA-6 or a blend having a PA-6 matrix;
(5) PA-6,y/ PA-6 or a blend having a PA-6 matrix / EVOH/ PA-6 or a blend having a PA-6 or a PA-6,y matrix.

The direct adhesion of PA-6,10 to EVOH is, however, effective only if the EVOH has a sufficient ethylene content. For the same ethylene content of the EVOH, the adhesion to PA-6,10 is greater than to PA-6,12. To be able to use EVOHs with a low ethylene content, it will be preferred to use the structure (4) or the structure (5).

### Detailed description of the invention

**With regard to "Z",** its proportion is sufficient to lower the crystallinity of the PA-X,Y and to make it easier to add plasticizer or impact modifier, but not too high so as not to obtain a copolyamide having a melting point below that of PA-12. This proportion is at most 15%, however, depending on the nature of the constituents of Z, it may vary - a person skilled in the art can readily check the lowering of the crystallinity by carrying out a DSC (differential scanning calorimetry) measurement on the PA-X,Y and then on the PA-X,Y/ Z. Advantageously, the proportion of Z is between 0 and 10% and preferably between 1 and 5%. The lactam may be chosen from caprolactam and lauryllactam. The number of carbon atoms of X1 may be between 6 and 14. The number of carbon atoms of Y1 may be between 6 and 14.

The polyamide A1 is manufactured using known techniques for the production of polyamides.

**With regard to the plasticizer,** this is chosen from benzenesulphonamide derivatives, such as N-butylbenzenesulphonamide (BBSA), ethyltoluenesulphonamide or N-cyclohexyltoluenesulphonamide; esters of hydroxybenzoic acids, such as 2-ethylhexyl-para-hydroxybenzoate and 2-decylhexyl-para-hydroxybenzoate; esters or ethers of tetrahydrofurfuryl alcohol, like oligoethoxylated tetrahydrofurfuryl alcohol; and esters of citric acid or hydroxymalonic acid, such as oligoethoxylated malonate. Mention may also be made of decylhexyl-para-hydroxybenzoate and ethylhexyl-para-hydroxybenzoate. One particularly preferred plasticizer is N-butylbenzenesulphonamide (BBSA).

**With regard to the impact modifier,** mention may be made, for example, of polyolefins, crosslinked polyolefins, EPR, EPDM, SBS and SEBS elastomers, it being possible for these elastomers to be grafted in order to make it easier to compatibilize them with the polyamide, copolymers having polyamide blocks and polyether blocks. These copolymers having polyamide blocks and polyether blocks are known per se - they are also called PEBAs (polyether-block-amides). Mention may also be made of acrylic elastomers, for example those of the NBR, HNBR or X-NBR type. Described in detail below are crosslinked polyolefins and then polyolefins.

**As regards the crosslinked polyolefins,** this phase can originate (i) from the reaction of two polyolefins having groups which react with one another, (ii) from maleated polyolefins with a monomeric, oligomeric or polymeric diamino molecule, (iii) or from one (or more) unsaturated polyolefin carrying unsaturation and which can be crosslinked, for example, by the peroxide route. As regards the reaction of two polyolefins, this crosslinked phase originates, for example, from the reaction:
- of a product (A) comprising an unsaturated epoxide,
- of a product (B) comprising an unsaturated carboxylic acid anhydride,
- optionally of a product (C) comprising an unsaturated carboxylic acid or of an α,ω-aminocarboxylic acid.

As regards the crosslinked polyolefins, mention may be made, as examples of product (A), of those comprising ethylene and an unsaturated epoxide.

According to a first form of the invention, (A) is either an ethylene unsaturated epoxide copolymer or a polyolefin grafted by an unsaturated epoxide.

As regards the polyolefin grafted by an unsaturated epoxide, the term "polyolefin" is understood to mean polymers comprising olefin units, such as, for example, ethylene, propylene, 1-butene or all other α-olefin units. Mention may be made, by way of example, of:
- polyethylenes, such as LDPE, HDPE, LLDPE or VLDPE, polypropylene, ethylene/propylene copolymers, EPRs (ethylene-propylene rubber) or else metallocene PEs (copolymers obtained by single-site catalysis),
- styrene/ethylene-butylene/styrene (SEBS) block copolymers, styrene/ butadiene/styrene (SBS) block copolymers, styrene/isoprene/styrene (SIS) block copolymers, styrene/ethylene-propylene/styrene (SEPS) block copolymers or ethylene-propylene-diene monomer (EPDM) terpolymers;
- copolymers of ethylene with at least one product chosen from salts or esters of unsaturated carboxylic acids or vinyl esters of saturated carboxylic acids.

Advantageously, the polyolefin is chosen from LLDPE, VLDPE, polypropylene, ethylene/vinyl acetate copolymers or ethylene/alkyl (meth)acrylate copolymers. The density may advantageously be between 0.86 and 0.965 and the melt flow index (MFI) may be between 0.3 and 40 (in g/10 min at 190°C / 2.16 kg).

As regards the ethylene unsaturated epoxide copolymers, mention may be made, for example, of copolymers of ethylene with an alkyl (meth)acrylate and with an unsaturated epoxide or copolymers of ethylene with a saturated carboxylic acid vinyl ester and with an unsaturated epoxide. The amount of epoxide may be up to 15% by weight of the copolymer and the amount of ethylene at least 50% by weight.

Advantageously, (A) is an ethylene alkyl (meth)acrylate unsaturated epoxide copolymer.

Preferably, the alkyl (meth)acrylate is such that the alkyl has 2 to 10 carbon atoms.

The MFI (melt flow index) of (A) may, for example, be between 0.1 and 50 (g/10 min at 190°C / 2.16 kg).

Examples of alkyl acrylates and methacrylates that may be used are in particular methyl methacrylate, ethyl acrylate, n-butyl acrylate, isobutyl acrylate and 2-ethylhexyl acrylate. Examples of unsaturated epoxides that may be used are in particular:
- aliphatic glycidyl esters and ethers, such as allyl glycidyl ether, vinyl glycidyl ether, glycidyl maleate, glycidyl itaconate, glycidyl acrylate and glycidyl methacrylate, and
- alicyclic glycidyl esters and ethers, such as 2-cyclohexen-1-yl glycidyl ether, diglycidyl cyclohexene-4,5-dicarboxylate, glycidyl cyclohexene-4-carboxylate, glycidyl 5-norbornene-2-methyl-2-carboxylate and diglycidyl *endo-cis*-bicyclo[2.2.1 ]hept-5-ene-2,3-dicarboxylate.

According to another form of the invention, the product (A) is a product having two epoxide functional groups, such as, for example, bisphenol A diglycidyl ether (BADGE).

Mention may be made, as examples of product (B), of those comprising ethylene and an unsaturated carboxylic acid anhydride.

(B) is either an ethylene unsaturated carboxylic acid anhydride copolymer or a polyolefin grafted by an unsaturated carboxylic acid anhydride.

The polyolefin may be chosen from the polyolefins mentioned above which have to be grafted by an unsaturated epoxide.

Examples of unsaturated dicarboxylic acid anhydrides that may be used as constituents of (B) are in particular maleic anhydride, itaconic anhydride, citraconic anhydride and tetrahydrophthalic anhydride.

Mention may be made, as examples, of copolymers of ethylene, of an alkyl (meth)acrylate and of an unsaturated carboxylic acid anhydride and copolymers of ethylene, of a saturated carboxylic acid vinyl ester and of an unsaturated carboxylic acid anhydride.

The amount of unsaturated carboxylic acid anhydride may be up to 15% by weight of the copolymer and the amount of ethylene at least 50% by weight.

Advantageously, (B) is a copolymer of ethylene with an alkyl (meth)acrylate and with an unsaturated carboxylic acid anhydride. Preferably, the alkyl (meth)acrylate is such that the alkyl has 2 to 10 carbon atoms. The alkyl (meth)acrylate may be chosen from those mentioned above. The MFI of (B) may, for example, be between 0.1 and 50 (g/10 min at 190°C / 2.16 kg).

It would not be outside the scope of the invention if a portion of the copolymer (B) were to be replaced with an ethylene/acrylic acid copolymer or an ethylene/maleic anhydride copolymer, the maleic anhydride having been completely or partially hydrolysed. These copolymers may also comprise an alkyl (meth)acrylate. This portion may represent up to 30% of (B).

According to another form of the invention, (B) can be chosen from aliphatic, alicyclic or aromatic polycarboxylic acids or their partial or complete anhydrides.

Mention may be made, as examples of aliphatic acids, of succinic acid, glutaric acid, pimelic acid, azelaic acid, sebacic acid, adipic acid, dodecanedicarboxylic acid, octadecanedicarboxylic acid, dodecenesuccinic acid and butanetetracarboxylic acid.

Mention may be made, as examples of alicyclic acids, of cyclopentanedicarboxylic acid, cyclopentanetricarboxylic acid, cyclopentanetetracarboxylic acid, cyclohexanedicarboxylic acid, hexanetricarboxylic acid, methylcyclopentanedicarboxylic acid, tetrahydrophthalic acid, endo-methylenetetrahydrophthalic acid and methyl-endo-methylenetetrahydrophthalic acid.

Mention may be made, as examples of aromatic acids, of phthalic acid, isophthalic acid, terephthalic acid, trimellitic acid, trimesic acid or pyromellitic acid.

Mention may be made, as examples of anhydrides, of the partial or complete anhydrides of the above acids.

Use is advantageously made of adipic acid.

With regard to the product (C) comprising an unsaturated carboxylic acid, mention may be made, as examples, of the products (B) completely or partly hydrolysed. (C) is, for example, an ethylene unsaturated carboxylic acid copolymer and advantageously an ethylene (meth)acrylic acid copolymer.

Mention may also be made of ethylene alkyl (meth)acrylate acrylic acid copolymers. These copolymers have for example an MFI of between 0.1 and 50 (g/10 min at 190°C / 2.16 kg).

The amount of acid may be up to 10% by weight and preferably 0.5 to 5%. The amount of (meth)acrylate is for example from 5 to 40% by weight.

(C) may also be chosen from α,ω-aminocarboxylic acids, such as, for example, NH₂-(CH₂)₅COOH, NH₂-(CH₂)₁₀COOH and NH₂(CH₂)₁₁-COOH and preferably aminoundecanoic acid.

The proportion of (A) and (B) necessary to form the crosslinked phase is determined according to the usual rules of the art by the number of reactive functional groups present in (A) and in (B).

For example, in the crosslinked phases comprising (C) chosen from α,ω-aminocarboxylic acids, if (A) is an ethylene alkyl (meth)acrylate unsaturated epoxide copolymer and (B) an ethylene alkyl (meth)acrylate unsaturated carboxylic acid anhydride copolymer, the proportions are such that the ratio of the anhydride functional groups to the epoxy functional groups is in the region of 1.

The amount of α,ω-aminocarboxylic acid is then from 0.1 to 3% and preferably 0.5 to 1.5% of (A) and (B).

As regards (C) comprising an unsaturated carboxylic acid, that is to say (C) being chosen, for example, from ethylene/alkyl (meth)acrylate/acrylic acid copolymers, the amount of (C) and (B) may be chosen so that the number of acid functional groups and of anhydride functional groups is at least equal to the number of epoxide functional groups and, advantageously, products (B) and (C) are used such that (C) represents 20 to 80% by weight of (B) and preferably 20 to 50%.

It would not be outside the scope of the invention if a catalyst were added. These catalysts are generally used for the reactions between the epoxy groups and the anhydride groups.

Mention may in particular be made, among the compounds capable of accelerating the reaction between the epoxy functional group present in (A) and the anhydride or acid functional group present in (B), of:
- tertiary amines, such as dimethyllaurylamine, dimethylstearylamine, N-butylmorpholine, N,N-dimethylcyclohexylamine, benzyldimethylamine, pyridine, 4-(dimethylamino)pyridine, 1-methylimidazole, tetramethylethylhydrazine, N,N-dimethylpiperazine, N,N,N',N'-tetramethyl-I,6-hexanediamine or a mixture of tertiary amines having from 16 to 18 carbons and known under the name of dimethyltallowamine
   - 1,4-diazabicyclo[2.2.2]octane (DABCO)
   - tertiary phosphines, such as triphenylphosphine
   - zinc alkyldithiocarbamates.

The amount of these catalysts is advantageously from 0.1 to 3% and preferably 0.5 to 1% of (A) + (B) + (C).

**As regards the noncrosslinked polyolefins,** mention may be made of the polyolefins described in the preceding section and intended to be grafted by reactive groups. Mention may also be made of the products (A) or (B) or (C) of the preceding section but used alone in order not to crosslink.

**With regard to the polyamide A2,** this is a polyamide which is not the identical as A1 but could be choosen in the same family of A1. Mention may be made of PA 11, PA 6 and PA 12. In a specific embodiment this is a polyamide containing a polycondensation catalyst, such as an organic or mineral acid, for example phosphoric acid. The catalyst may be added to the polyamide A2 after it has been prepared by any process or quite simply, and as is preferred, it may be the residue of the catalyst used for its preparation. The term "catalyzed polyamide" means that the chemistry will be continued beyond the steps for synthesizing the base resin and therefore during the subsequent steps in the preparation of the compositions of the invention. Polymerization and/or depolymerization reactions may very substantially take place during the blending of the polyamides A1 and A2 to prepare the compositions of the present invention. Typically, the Applicant believes (without being tied down by this explanation) that polymerization is continued (by chain extension) and that the chains become branched (for example by bridging via phosphoric acid). In addition, this may be considered as a tendency towards re-equilibration of the polymerization equilibrium, and therefore a kind of homogenization. However, it is recommended that the polyamides be thoroughly dried (and advantageously their moisture content properly controlled) in order to avoid any depolymerization. The amount of catalyst may be between 5 ppm and 15000 ppm of phosphoric acid relative to A2. The amount of catalyst may be up to 3000 ppm relative to the amount of polyamide A2 and advantageously between 50 and 1000 ppm. In the case of other catalysts, for example boric acid, the contents will be different and may be chosen appropriately depending on the usual techniques for the polycondensation of polyamides. Advantageously, A2 is chosen from PA-11,PA 6 and PA-12.

**With regard to the proportions** of A1, of the plasticizer, of the impact modifier and of A2, these may vary widely.

To make compressed-air hoses useful in the brake circuits of heavy goods vehicles, the plasticizer is (by weight) between 5 and 20% (advantageously between 10 and 15%), the impact modifier between 0 and 5%, the polyamide A2 between 0 and 5% and the balance made of polyamide A1. Preferably, A1 is PA-10,10 or PA6,y. This composition exhibits good impact strength and burst strength after ageing.

**With regard to the preparation of the compositions of the invention,** these may be prepared by melt-blending the constituents using the standard techniques for thermoplastics.

The compositions according to the invention may additionally include at least one additive chosen from:
dyes;
pigments;
brighteners;
antioxidants;
fire retardants;
UV stabilizers;
nanofillers;
nucleating agents.

**With regard to the multilayer structures,** mention may be made of the following:
Structure (a) comprising:
   a layer of the composition of the invention and a layer of another polyamide, a coextrusion tie being placed between them;
Structure (b) comprising:
   a layer of the composition of the invention between two polyamide layers, a coextrusion tie being placed between two or more of these layers (by way of example mention may be made of a layer of PA 11 or PA 12, a layer of the composition of the invention, a layer of PA 6);
In the above structures, one or more of the layers may contain conducting substances in order to make them antistatic. In the above structures, it is possible to add a layer that contains conductive substances in order to render it antistatic and thus render the structure antistatic. These hoses are used for transferring fluids, said fluid being compressed air for the brake circuits of heavy goods vehicles,and the layer mentioned first is the outer layer, the layer mentioned last is the layer in contact with the transported fluid. According to one possible form, the layer in contact with the fluid takes the form of two layers of the same composition except the one in contact with the fluid, which contains conductive substances in order to make it antistatic and thus render the structure antistatic. In the above structures and those in the rest of the text, the conductor may be carbon black or carbon fibres or carbon nanotubes. It is advantageous to use a carbon black chosen from those having a BET specific surface area, measured according to the ASTM D3037-89 standard, of 5 to 200 m²/g, and a DBP absorption, measured according to the ASTM D 2414-90 standard, of 50 to 300 ml/100 g. This is described in Application WO 99/33908,the proportions of carbon black are in general between 17 and 30% by weight and preferably around 23- 26%.

### Examples

### Example 1: Plasticized PA-10,10 for compressed-air brake applications.

Composition : PA-10,10 (86.4%) + 13% BBSA + 0.6% Polyad PB201.
Polyad PB201 denotes an inorganic antioxidant based on copper iodide. This formulation was tested and compared with the values of the DIN 73378 PHLY standard. The moduli were evaluated on the injection-moulded material and the burst strength and impact strength values were evaluated on an extruded tube with inside/outside diameters of 6 and 8 mm. The table below shows that the plasticized PA-10,10 meets this standard as regards modulus, burst strength and impact strength after ageing. The value of the burst strength at 140°C is greater than the requirements at 130°C.

| Property | Standard | Value | DIN 73378 PHLY |
|---|---|---|---|
| Tensile modulus after moulding (MPa) | ISO 527 | 550 | 450 - 600 |
| Flexural modulus after conditioning* (MPa) | ISO 178 | 480 | |
| 23°C burst strength (MPa) | DIN 73378 | 30 | >27 |
| 100°C burst strength (MPa) | DIN 73378 | 14.5 | >0.43* (23°C value) = 12.9 |
| 130°C burst strength (MPa) | DIN 73378 | 10.5 | >0.31* (23°C value) = 9.3 |
| 140°C burst strength (MPa) | DIN 73378 | 9.5 | |
| -40°C impact strength on tube after 72 h at 150°C | DIN 73378 | 0 breaks in 10 | No breaks at 23°C |

| | | | |
|---|---|---|---|
| * conditioning at 23°C/50% RH for 15 days. | | | |

### Example 2:

The following table shows that the flexural modulus can be lowered very significantly with this type of formulation, while still maintaining good thermomechanical properties and excellent ageing. In this table,
PA-6,10 denotes a PA-6,10 comprising 10% of a crosslinked phase LT, 15% of catalyzed PA-11 containing 600 ppm of phosphoric acid, 5% of BBSA and 0.6% of Polyad PB201 (the total being 100%).
"LT" and "PA-11" have the following meanings:
The crosslinked phase LT results from blending: 5% Lotader® 4700 + 2.5% Lotader® AX8900 + 2.5% Lucalen® A 3110M. Lotader® 4700 is an ethylene/ethyl acrylate/maleic anhydride copolymer containing 30% acrylate by weight and 1.5% MAH, and having an MFI of 7g/10 min at 190°C/2.16 kg. Lotader® AX8900 is an ethylene/methyl acrylate/glycidyl methacrylate copolymer containing 25% acrylate and 8% GMA by weight and having an MFI of 6 g/10 min at 190°C/2.16 kg. Lucalen® A 3110M denotes an ethylene/butyl acrylate/acrylic acid copolymer having an 88/8/4 composition by weight (sold by BASF).

The PA-6,10 exhibits interesting behaviour compared with the PA-6,12 with the same formulation: lower modulus but higher high-temperature burst strength. These materials may be used as petrol or diesel lines made of a monolayer or multilayer tube.

| | | | | |
|---|---|---|---|---|
| Formulations | Standard | PA-6,12 +10% LT + 15% PA-11 +5% BBSA +0.6% Polvad PB201 | PA-6,10 +10% LT + 15% PA-11 +5% BBSA +0.6% Polvad PB201 | PA-10,10 +10% LT + 15% PA-11 +5% BBSA +0.6% Polyad PB201 |
| Flexural modulus (MPa) | ISO 178 | 590 | 505 | 390 |
| Tensile modulus (MPa) | ISO 527 | 790 | 755 | 505 |
| 23°C burst strength (MPa) | DIN 73378 | 31 | 31 | 25 |
| 140°C burst strength (MPa) | DIN 73378 | 9.5 | 10.5 | 7 |
| -40°C Charpy notched impact strength (kJ/m²) | ISO 179 | 7.5 | 8 | 5.5 |
| Half-life/140°C thermal ageing in air (hours) | Atofina method* | >1200 | >1200 | >1200 |

| | | | | |
|---|---|---|---|---|
| *time after which the elongation of the test piece is reduced by a factor of 2 relative to the initial value (injection-moulded test piece). | | | | |

## Claims

1. Hose for transferring of fluids, said fluid being compressed air for the brake circuits of heavy goods vehicles, and in which the inner layer is in contact with said fluid, said hose comprising in succession from the outside inwards:
- a layer consisting of a composition, noted C, comprising, by weight, the total being 100%:
70 to 95%, advantageously 75 to 90%, of at least one polyamide A1, said polyamide A1 being chosen between PA-6.10, PA-6.14, PA-6.18 and PA-10.10,
- 5 to 20%, advantageously 10 to 15%, of a plasticizer;
- 0 to 5% of an impact modifier; and
- 0 to 5% of a polyamide A2
- a coextrusion tie; and
- a layer of another polyamide.

2. Hose according to claim 1, **characterized in that** said structure comprises, in succession from the outside inwards:
- a polyamide layer;
- a coextrusion tie layer;
- a layer of the composition C;
- a coextrusion tie layer; and
- a polyamide layer.

3. Hose according to any one of claims 1 or 2, **characterized in that** one or more of the layers contain conductive substances.

4. Hose according to any one of claims 1 to 3, **characterized in that** the layer in contact with the fluid takes the form of two layers of the same composition except the one in contact with the fluid, which contains conductive substances.

5. Hose according to any one of claims 1 to 4, **characterized in that** the plasticizer is N-butylbenzenesulphonamide (BBSA).

6. Hose according to any one of claims 1 to 5, **characterized in that** the impact modifier is chosen from crosslinked polyolefins.

7. Hose according to any one of claims 1 to 6, **characterized in that** the polyamide A2 contains a polycondensation catalyst.

## Patentansprüche

1. Schlauch zum Leiten von Fluiden, wobei es sich bei dem Fluid um Druckluft für die Bremskreise von Lastkraftwagen handelt, und wobei die innere Schicht in Kontakt mit dem Fluid ist, wobei der Schlauch aufeinanderfolgend von außen nach innen Folgendes umfasst:
- eine Schicht, bestehend aus einer Zusammensetzung, angegeben als C, die, bezogen auf das Gewicht, wobei sich die Summe auf 100 % beläuft, Folgendes umfasst:
70 bis 95 %, vorteilhafterweise 75 bis 90 %, mindestens eines Polyamids A1, wobei das Polyamid A1 ausgewählt ist aus PA-6.10, PA-6.14, PA-6.18 und PA-10.10,
- 5 bis 20 %, vorteilhafterweise 10 bis 15 %, eines Weichmachers;
- 0 bis 5 % eines Schlagzähigkeitsmodifikators; und
- 0 bis 5 % eines Polyamids A2;
- einen Koextrusionsbinder; und
- eine Schicht aus einem anderen Polyamid.

2. Schlauch nach Anspruch 1, **dadurch gekennzeichnet, dass** die Struktur, aufeinanderfolgend von außen nach innen, Folgendes umfasst:
- eine Polyamidschicht;
- eine Koextrusionsbinderschicht;
- eine Schicht aus der Zusammensetzung C;
- eine Koextrusionsbinderschicht; und
- eine Polyamidschicht.

3. Schlauch nach einem der Ansprüche 1 oder 2, **dadurch gekennzeichnet, dass** eine oder mehrere der Schichten leitfähige Substanzen enthalten.

4. Schlauch nach einem der Ansprüche 1 bis 3, **dadurch gekennzeichnet, dass** die Schicht, die in Kontakt mit dem Fluid ist, in Form von zwei Schichten mit derselben Zusammensetzung vorliegt, abgesehen davon, dass die Schicht, die in Kontakt mit dem Fluid ist, leitfähige Substanzen enthält.

5. Schlauch nach einem der Ansprüche 1 bis 4, **dadurch gekennzeichnet, dass** es sich bei dem Weichmacher um N-Butylbenzolsulfonamid (BBSA) handelt.

6. Schlauch nach einem der Ansprüche 1 bis 5, **dadurch gekennzeichnet, dass** der Schlagzähigkeitsmodifikator aus vernetzten Polyolefinen ausgewählt ist.

7. Schlauch nach einem der Ansprüche 1 bis 6, **dadurch gekennzeichnet, dass** das Polyamid A2 einen Polykondensationskatalysator enthält.

## Revendications

1. Tuyau destiné au transfert de fluides, ledit fluide étant de l'air comprimé destiné aux circuits de freinage des véhicules de poids lourds, et dans lequel la couche intérieure est en contact avec ledit fluide, ledit tuyau comprenant successivement de l'extérieur vers l'intérieur :
- une couche constituée d'une composition, notée C, comprenant, en poids, le total étant de 100 % :
70 à 95 %, avantageusement 75 à 90%, d'au moins un polyamide A1, ledit polyamide A1 étant choisi parmi PA-6.10, PA-6.14, PA-6.18 et PA-10.10,
- 5 à 20 %, avantageusement 10 à 15 %, d'un plastifiant ;
- 0 à 5 % d'un modifiant choc ; et
- 0 à 5 % d'un polyamide A2
- un liant de coextrusion ; et
- une couche d'un autre polyamide.

2. Tuyau selon la revendication 1, **caractérisé en ce que** ladite structure comprend successivement de l'extérieur vers l'intérieur :
- une couche de polyamide ;
- une couche de liant de coextrusion ;
- une couche de la composition C ;
- une couche de liant de coextrusion ; et
- une couche de polyamide.

3. Tuyau selon l'une quelconque des revendications 1 ou 2, **caractérisé en ce qu'**une ou plusieurs couches contiennent des substances conductrices.

4. Tuyau selon l'une quelconque des revendications 1 à 3, **caractérisé en ce que** la couche en contact avec le fluide prend la forme de deux couches de la même composition que celle en contact avec le fluide, qui contient des substances conductrices.

5. Tuyau selon l'une quelconque des revendications 1 à 4, **caractérisé en ce que** le plastifiant est le N-butylbenzènesulfonamide (BBSA).

6. Tuyau selon l'une quelconque des revendications 1 à 5, **caractérisé en ce que** le modificateur d'impact est choisi parmi les polyoléfines réticulées.

7. Tuyau selon l'une quelconque des revendications 1 à 6, **caractérisé en ce que** le polyamide A2 contient un catalyseur de polycondensation.
